(19) Europäisches Patentamt
European Patent Office
Office européen des brevets

(11) **EP 4 564 120 A1**

(12) **EUROPEAN PATENT APPLICATION**

(43) Date of publication:
**04.06.2025   Bulletin 2025/23**

(21) Application number: **24185217.7**

(22) Date of filing: **28.06.2024**

(51) International Patent Classification (IPC):
**G05D 1/644** (2024.01)    **G05D 1/246** (2024.01)
**G05D 1/242** (2024.01)    **G05D 111/10** (2024.01)
**G05D 101/15** (2024.01)    **G05D 109/10** (2024.01)

(52) Cooperative Patent Classification (CPC):
**G05D 1/2464; G05D 1/242; G05D 1/644;**
**G06N 3/00;** G05D 2101/15; G05D 2109/10;
G05D 2111/17

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **01.12.2023   EP 23213575**

(71) Applicant: **Continental Automotive Technologies
GmbH
30175 Hannover (DE)**

(72) Inventors:
• **Derajic, Bojan
  30175 Hannover (DE)**
• **Dr. Bernhard, Sebastian
  30175 Hannover (DE)**

(74) Representative: **Continental Corporation
c/o Continental Automotive Technologies GmbH
Intellectual Property
Putzbrunnerstr. 69
81739 München (DE)**

(54) **MOTION PLANNING SYSTEM INCORPORATING CONSTRAINT FUNCTIONS FOR A MOBILE ROBOT AND ASSOCIATED COMPUTER-IMPLEMENTED METHODS**

(57)     In order to improve motion planning in a mobile robot (10), such as a vehicle, the invention proposes a method comprising a sensor system (22) capturing sensor data, wherein the sensor data are indicative of an environment (12), that contains an obstacle (14); and a control module processing the sensor data to obtain at least one binary cost map (54), wherein each binary cost map (54) is indicative of occupied and unoccupied portions of the environment (12); processing each binary cost map (54) with a hypernetwork (32) that generates a parameter set (θ) for a main network (34) based on the binary cost map (54). The parameter set (θ) causes the main network (34) to generate constraint data from a motion related state vector (x) of the mobile robot (10). After the main network (34) is set up with the parameter set (θ) the control module generates a control signal (46) based on a command signal (44), a current state vector (x) and the constraint data, and the control signal (46) is generated to cause the mobile robot (10) to move through the environment (12) along a robot trajectory with the proviso that each obstacle (14) is avoided.

Fig. 2

EP 4 564 120 A1

## Description

TECHNICAL FIELD

The invention relates to a method for motion planning in a mobile robot, preferably a vehicle. The invention further relates to a training method and devices for carrying out the methods.

BACKGROUND

Model predictive control (MPC) with a simple distance constraint is described in:

[1] X. Zhang, A. Liniger, and F. Borrelli, "Optimization-Based Collision Avoidance." arXiv, Jun. 10, 2018. Accessed: Jun. 29, 2023. [Online]. Available: http://arxiv.org/abs/1711.03449;

[2] B. Brito, B. Floor, L. Ferranti, and J. Alonso-Mora, "Model Predictive Contouring Control for Collision Avoidance in Unstructured Dynamic Environments." arXiv, Oct. 20, 2020. Accessed: May 16, 2023. [Online]. Available: http://arxiv.org/abs/2010.10190; and

[3] S. H. Nair, E. H. Tseng, and F. Borrelli, "Collision Avoidance for Dynamic Obstacles with Uncertain Predictions using Model Predictive Control." arXiv, Aug. 06, 2022. Accessed: May 19, 2023. [Online]. Available: http://arxiv.org/abs/2208.03529.
Control Barrier Functions (CBFs) are described in:

[4] A. D. Ames, X. Xu, J. W. Grizzle, and P. Tabuada, "Control Barrier Function Based Quadratic Programs for Safety Critical Systems," IEEE Trans. Automat. Contr., vol. 62, no. 8, pp. 3861-3876, Aug. 2017, doi: 10.1109/TAC.2016.2638961; and

[5] A. D. Ames, S. Coogan, M. Egerstedt, G. Notomista, K. Sreenath, and P. Tabuada, "Control Barrier Functions: Theory and Applications." arXiv, Mar. 26, 2019. Accessed: May 10, 2023. [Online]. Available: http://arxiv.org/abs/1903.11199.
MPC with CBFs as constraints is described in:

[6] J. Zeng, B. Zhang, and K. Sreenath, "Safety-Critical Model Predictive Control with Discrete-Time Control Barrier Function." arXiv, Mar. 23, 2021. Accessed: May 10, 2023. [Online]. Available: http://arxiv.org/abs/2007.11718;

[7] V. Vulcano, S. G. Tarantos, P. Ferrari, and G. Oriolo, "Safe Robot Navigation in a Crowd Combining NMPC and Control Barrier Functions," in 2022 IEEE 61st Conference on Decision and Control (CDC), Cancun, Mexico: IEEE, Dec. 2022, pp. 3321-3328. doi: 10.1109/CDC51059.2022.9993397;

[8] N. N. Minh, S. McIlvanna, Y. Sun, Y. Jin, and M. Van, "Safety-critical model predictive control with control barrier function for dynamic obstacle avoidance." arXiv, Nov. 21, 2022. Accessed: Jun. 24, 2023. [Online]. Available: http://arxiv.org/abs/2211.11348;

[9] A. Thirugnanam, J. Zeng, and K. Sreenath, "Safety-Critical Control and Planning for Obstacle Avoidance between Polytopes with Control Barrier Functions," in 2022 International Conference on Robotics and Automation (ICRA), Philadelphia, PA, USA: IEEE, May 2022, pp. 286-292. doi: 10.1109/ICRA46639.2022.9812334; and

[10] Z. Jian et al., "Dynamic Control Barrier Function-based Model Predictive Control to Safety-Critical Obstacle-Avoidance of Mobile Robot." arXiv, Sep. 18, 2022. Accessed: May 15, 2023. [Online]. Available: http://arxiv.org/abs/2209.08539.
The following references relate to learning of CBFs:

[11] M. Srinivasan, A. Dabholkar, S. Coogan, and P. Vela, "Synthesis of Control Barrier Functions Using a Supervised Machine Learning Approach." arXiv, Mar. 10, 2020. Accessed: May 17, 2023. [Online]. Available: http://arxiv.org/abs/2003.04950;

[12] K. Long, C. Qian, J. Cortés, and N. Atanasov, "Learning Barrier Functions with Memory for Robust Safe Navigation." arXiv, Feb. 10, 2021. Accessed: Jun. 24, 2023. [Online]. Available: http://arxiv.org/abs/2011.01899;

[13] A. S. Lafmejani, S. Berman, and G. Fainekos, "NMPC-LBF: Nonlinear MPC with Learned Barrier Function for Decentralized Safe Navigation of Multiple Robots in Unknown Environments." arXiv, Aug. 16, 2022. Accessed: Jun. 23, 2023. [Online]. Available: http://arxiv.org/abs/2208.07974; and

[14] G. S. Camps, R. Dyro, M. Pavone, and M. Schwager, "Learning Deep SDF Maps Online for Robot Navigation and Exploration." arXiv, Aug. 02, 2022. Accessed: Jul. 24, 2023. [Online]. Available: http://arxiv.org/abs/2207.10782.
Signed Distance Fields (SDFs) are described in:

[15] H. Oleynikova, A. Millane, Z. Taylor, E. Galceran, J. Nieto, and R. Siegwart, "Signed Distance Fields: A Natural Representation for Both Mapping and Planning," p. 6 p., 2016, doi: 10.3929/ETHZ-A-010820134; and

[16] C. Bálint, G. Valasek, and L. Gergó, "Operations on Signed Distance Functions," Acta Cybern, vol. 24, no. 1, pp. 17-28, May 2019, doi:

10.14232/actacyb.24.1.2019.3.

Hypernetworks are generally known from:

[17] D. Ha, A. Dai, and Q. V. Le, "HyperNetworks." arXiv, Dec. 01, 2016. Accessed: Sep. 11, 2023. [Online]. Available: http://arxiv.org/abs/1609.09106;

[18] L. Deutsch, "Generating Neural Networks with Neural Networks." arXiv, Apr. 06, 2018. Accessed: Sep. 11, 2023. [Online]. Available: http://arxiv.org/abs/1801.01952;

[19] G. Littwin and L. Wolf, "Deep Meta Functionals for Shape Representation." arXiv, Aug. 17, 2019. Accessed: Sep. 11, 2023. [Online]. Available: http://arxiv.org/abs/1908.06277; and

[20] V. K. Chauhan, J. Zhou, P. Lu, S. Molaei, and D. A. Clifton, "A Brief Review of Hypernetworks in Deep Learning." arXiv, Aug. 10, 2023. Accessed: Sep. 11, 2023. [Online]. Available: http://arxiv.org/abs/2306.06955.
Regularization, in particular Lipschitz regularization and spectral normalization, is described in:

[21] T. Miyato, T. Kataoka, M. Koyama, and Y. Yoshida, "Spectral Normalization for Generative Adversarial Networks." arXiv, Feb. 16, 2018. doi: 10.48550/arXiv. 1802.05957;

[22] H. Gouk, E. Frank, B. Pfahringer, and M. J. Cree, "Regularisation of Neural Networks by Enforcing Lipschitz Continuity." arXiv, Aug. 09, 2020. Accessed: Jun. 14, 2023. [Online]. Available: http://arxiv.org/abs/1804.04368; and

[23] H.-T. D. Liu, F. Williams, A. Jacobson, S. Fidler, and O. Litany, "Learning Smooth Neural Functions via Lipschitz Regularization." arXiv, May 10, 2022. Accessed: Jun. 14, 2023. [Online]. Available: http://arxiv.org/abs/2202.08345.

Motion planning and control is a common task in autonomous mobility and an active area of research. The main goal of motion planning is to generate and execute a trajectory so that a mobile robot, such as a vehicle, e.g., a car, can move from an initial position through an environment to some desired final position. In order to avoid possible obstacles along the robot trajectory, the robot controller usually uses some type of constraint function(s).

Constraint functions are functions which are used within constrained optimization methods as equality and/or inequality constraints. The main purpose of those functions is to define the domain of admissible solutions of the optimization problem.

In other words the constraint function allows a distinction between a set of allowable robot trajectories through the environment from a set of unallowable robot trajectories. Unallowable trajectories include robot trajectories that would - without any modification - lead to a collision or other undesired situation, for example.

Typically, for a constrained optimization problem that is generally only solved once, constraint functions are defined beforehand and usually manually. However, for systems that repeatedly solve an optimization problem while the constraints may change during the time, it is the general approach to generate each constraint function in real-time.

Real-time approaches are Quadratic Program (QP) based controllers and Model Predictive Control (MPC). Both of these techniques rely on a numerical optimization algorithm, which is executed repeatedly at every time step. Using these controllers for motion planning and control generates a new set of constraint functions at each time step based on the current arrangement of obstacles in the environment.

The most common approach for generating such constraint functions in real-time is to use simple geometrical primitives such as ellipses, circles, halfplanes, etc. For example, if an ellipse is used to represent an obstacle, then the center and lengths of the axes of the ellipse are estimated so that the ellipse contains the obstacle. After estimating the respective primitive, its mathematical equation is used as a constraint function in such a manner that the optimization algorithm prevents collision between the controlled system and that obstacle, by avoiding the region covered by the primitive. Usually, each obstacle can be represented using one or more such geometrical primitives.

Another popular approach is to use Machine Learning (ML) models to represent the shapes of obstacles. The model can be trained either offline or online. In the offline training scenario, the ML model is trained only once before deployment or periodically when it is not used. Such a model is typically trained on a large dataset that should be curated to represent many different scenarios and environments. On the other hand, in the online training scenario, the ML model is trained using a relatively small data set that is generated in real time. In this case, the model typically overfits to the current local observations of the surrounding environment and is retrained at each time step. In both cases, however, the conventional approach involves the creation of at least one primitive for each obstacle which comes along with comparatively large computational effort and memory requirements.

SUMMARY OF THE INVENTION

It is the object of the invention to improve motion planning in mobile robots, preferably with respect to obstacle avoidance and/or collision prevention.

The object is achieved by the subject-matter of the independent claims. Preferred embodiments are subject-matter of the dependent claims.

The invention provides a computer-implemented method for motion planning in a mobile robot, preferably in a vehicle, the method comprising:

a) a sensor system capturing sensor data, wherein the sensor data are indicative of an environment around the mobile robot, wherein the environment optionally has at least one obstacle;

a control module:

b) processing the sensor data of step a) to obtain at least one binary cost map, wherein each binary cost map is indicative of occupied and unoccupied portions of the environment;

c) processing each binary cost map with a hypernetwork that is trained for generating a parameter set for a main network based on the binary cost map, wherein the parameter set is configured to cause the main network to generate constraint data from a state vector, wherein the constraint data are configured to constrain a control signal to be generated, wherein the state vector is indicative of a state of motion of the mobile robot;

d) applying the parameter set to the main network to set up the main network for generating the constraint data from the state vector, and generating the constraint data from a current state vector;

e) generating the control signal based on a command signal, a current state vector and the constraint data, wherein the control signal is generated to cause the mobile robot to move through the environment along a robot trajectory with the proviso that each obstacle is avoided.

Preferably, in step a) the sensor system comprises a distance measuring apparatus, preferably a LIDAR apparatus, that captures a point cloud as the sensor data.

Preferably, in step c) the hypernetwork includes a convolutional backbone and a fully connected decoder head, and the binary cost maps are processed by the convolutional backbone for feature extraction and the decoder head decodes extracted features into the parameter set.

Preferably, in step c) the parameter set is regularized, preferably with Lipschitz regularization, before being applied to the main network.

The invention provides a motion planning system for a mobile robot, preferably for a vehicle, the system comprising means for carrying out a preferred motion planning method.

The invention provides a mobile robot, preferably a vehicle, comprising a motion planning system, wherein the motion planning system controls motion of the mobile robot.

The invention provides a computer-implemented method for training a motion planning system, the method comprising:

a) discretizing a state-space of the mobile robot to obtain a set of state vectors for training;

for at least one, some, or each state vector obtained in step a):

b) feeding a training dataset consisting of binary cost maps to the hypernetwork to generate a parameter set for a main network

c) setting up the main network with the parameter set of step b);

d) feeding the state vector to the main network to obtain constraint data;

e) feeding the training data set to a ground truth calculator and determining ground truth data by determining, with an SDF module, signed distance field data that are indicative of a distance of the mobile robot from an obstacle;

f) updating the parameters of the hypernetwork based on a cost function applied to the constraint data and the ground truth data.

Preferably, in step e) determining the ground truth data involves processing the output of the SDF module with an HJ analysis module that determines the ground truth based on a BRT in state space.

Preferably, in step f) the cost function is a mean squared error (MSE) cost function.

Preferably, in step f) the cost function is a weighted MSE cost function, wherein the weights are increased based on the ground truth in an area where the ground truth represents a boundary of an obstacle.

The invention provides a computer program comprising instructions, which, upon execution by a data processing device, cause the data processing device to carry out the steps b) to e) of a method for motion planning or to carry out a method for training a motion planning system.

The invention provides a computer readable data storage medium that has stored thereon the computer program.

One idea is to use an offline trained large neural hypernetwork (a few million up to 20 million parameters) to parametrize, preferably in real-time, a relatively simple network (main network with typically few hundred up to 5,000 parameters), which is then used as a constraint function for the controller. In some embodiments conditioning of the parameters generated by the output of the hypernetwork can be done.

A hypernetwork is used to parametrize the main network which in turn is used as the constraint function. The hypernetwork, can be complex and expressive model with a large number of trainable parameters. For example, the hypernetwork may involve a backbone part and one fully connected head. The backbone may include multiple convolutional layers for feature extraction. The head basically functions as a decoder that decodes the result of the backbone into parameter values.

The input to the hypernetwork are appropriate features that can be obtained from binary cost maps, for example, while the output of the hypernetwork is a parameter set (i.e. weights and biases) of the main network. The parameter set, when applied to the main network, causes the main network to act as a constraint function within a real-time constrained optimization procedure.

The parameters of the hypernetwork are preferably trained offline, while the parameters of the main network are generated online using the trained hypernetwork. Due to the training, the hypernetwork contains 'knowledge' about how to parametrize the main network for the specific situation observed at a particular time step.

The constraint function is represented as a neural network (the main network), which is a more flexible and more general approximator. Thus, the disclosed idea is able to represent a greater class of constraint functions. As a result, overapproximating of the occupied space can be mitigated or avoided. Furthermore it is possible to reduce conservativeness. Overconservativeness designates the situation that simple geometrical primitives for most of the time overapproximate the space occupied by obstacles. The reduction or avoidance of overconservativeness allows the optimization-based controllers to find optimal solutions that are blocked by overconservativeness. Consequently, with this approach it is possible to generate robot trajectories that are otherwise unobtainable.

The use of a single main network to represent occupied and free space, regardless of the number of obstacles that are locally observed, an increase in computational complexity and thus computational power and memory resources for the numerical optimization can be avoided, even if the number of obstacles increases. In other words, the computational resource requirements for avoiding obstacles can be decoupled from the number of obstacles, thereby allowing safer motion through cluttered environments with lots of obstacles.

The separation between a trainable hypernetwork and the main network allows for the main network to be a lightweight model, which is computationally cheap to evaluate by the numerical optimization algorithm of the MPC. The main network is designed to be expressive enough to represent only the local constraint function accurately.

The hypernetwork is preferably trained offline, while the parameters of the main network are generated with a single forward pass of the hypernetwork. Therefore, no iterative learning procedure involved. Consequently, real-time training of the AI models using iterative procedures can be avoided. The iterative training typically takes significant computational power even for simple models and small datasets, so that with the disclosed approach real-time feasibility can be achieved.

In some embodiments prior knowledge can be integrated into the main network by additionally conditioning the parameter set that was generated by the hypernetwork. The conditioning step of the generated parameters allows to enforce a specific regularization or to induce prior knowledge related to the constraint functions. As a result, the main network can have improved generalization properties so that the approximation error is relatively small, especially for input data that is outside of the training dataset.

Similarly to the generalization issue, enforcing specific types of regularizations or inducing prior knowledge can help to establish mathematically rigorous properties of the main network, and allow for its use in safety-critical applications. For example, it is possible to ensure that by changing the input by a certain amount $\Delta x$ the output does not change more than $L\Delta x$, where $L$ is a constant, e.g., $L=1$.

It is one idea to use the previously described approach for the task of motion planning and motion control of a mobile robot. The mobile robot can be a logistics robot, a passenger vehicle or an aerial vehicle or the like. The state of the mobile robot can be described by position, orientation, linear and angular velocity and/or linear and angular acceleration.

In some embodiments the hypernetwork receives a local binary cost map as an input. This cost map is usually in the form of a binary image in which each white pixel represents free space, and each black pixel represents occupied space. The cost map is obtained from the perception stack of a robot that processes sensor system input.

In some embodiments the hypernetwork is a Deep Convolutional Neural Network (DCNN). Since the input to the hypernetwork is a local cost map in form of an image, CNN is a suitable model to use.

The parameter set generated by the hyper network includes, for example, weights and biases for the main network.

In some embodiments the parameter set is conditioned, e.g. by spectral normalization (i.e. Lipschitz regularization). In some embodiments the robot's dynamics are described with position, orientation, linear and angular velocity, and a Signed Distance Field (SDF) is used as a Controlled Barrier Function (CBF). The SDF has the advantage of having Lipschitz constant $L = 1$. Thus, this approach ensures that a change in the output is at maximum the same as the change in the input.

In some embodiments the CBF, i.e. SDF, is conditioned using Lipschitz regularization (spectral normalization) on the parameter set generated by the hypernetwork. In this way, it can be ensured that the main network also has Lipschitz constant equal to 1, and as a result the learning process can be improved as well as the generalization properties outside of the training dataset.

The main network is preferably a shallow Fully Connected Neural Network (FCNN). The main network is chosen as lightweight as possible to increase computational resource efficiency and allow effective utilization within the optimization algorithm as a constraint function. Also, applying spectral normalization to the parameters of an FCNN is relatively simple.

The MPC is generally known and a suitable optimization-based controller for this task due to its well-known properties and wide use in practice. Combining MPC and CBFs as constraints further improves the method compared to simple inequality constraints.

In another step sample points (e.g. uniformly) are taken on that cost map and the SDF values for those points are evaluated. The trainable parameters of the hypernetwork are trained in a supervised manner. Each training pair consists of one local cost map and one spatial point (x and y coordinates) as input, and calculated SDF value for that point as ground truth. During the training process, spectral normalization is preferably active as well as during deployment. The cost function can be any standard cost function used in regression tasks (e.g. mean squared error) and the same holds for the learning algorithm (e.g. stochastic gradient descent, ADAM, etc.).

In some embodiments the SDF values can be fed to a Hamilton-Jacobi reachability analysis module that further improves the value prediction and outputs a reachability score.

In some embodiments the cost function is a weighted mean squared error function, where the weights are greater, when the SDF values or the reachability score represent a boundary of the obstacle and smaller otherwise. One suitable choice for the weights is $w = 1 + \alpha \exp(-\beta V^2)$, where $\alpha$ and $\beta$ are hyperparameters and $V$ is the SDF value or the reachability score.

A training dataset, i.e. set of binary local cost maps can be generated in different ways. One way is to use simulation environments such as Gazebo or Carla, and steering the robot through the environment and collecting cost maps produced by the perception stack. Another approach would be to use some of the existing sets of 3D models of different types of environments (indoor or outdoor, e.g. Stanford 3D Indoor Scene Dataset), and generate 2D binary cost maps from them. Also, it is possible to create a set of real-world cost maps by steering a robot through a real environment and recording cost maps produced by the perception stack of the robot. Another approach is to generate the cost maps from available floor plans of buildings, road maps or similar geoinformation. The cost maps may be augmented by translation, cropping, rotation, etc. The dataset used for training of the hypernetwork is preferably curated to represent the environment where the robot will be deployed.

Overall the invention can improve performance of optimization-based motion planning and control tasks in any of several ways, among them being reducing overconservativeness, keeping constant computational costs in increasingly complex environments, improving generalization properties, decreasing evaluation costs of a constraint function even in complex environments, eliminating the need for iterative model training in real-time, and providing formal guarantees.

The method has greater flexibility in terms of implementation and application, an intuitive structure, and allows for the integration of common/prior knowledge. Furthermore, the method can be easily extended to other optimization-based control tasks with time-varying and complex constraints.

BRIEF DESCRIPTION OF THE DRAWINGS

Embodiments of the invention are described in more detail with reference to the accompanying schematic drawings.

Fig. 1 depicts an environment in which a mobile robot is moving;
Fig. 2 depicts an embodiment of a motion planning system;
Fig. 3 depicts an embodiment of a training setup for the motion planning system; and
Fig. 4 depicts a variant of the training setup of Fig. 3.

DETAILED DESCRIPTION OF EMBODIMENT

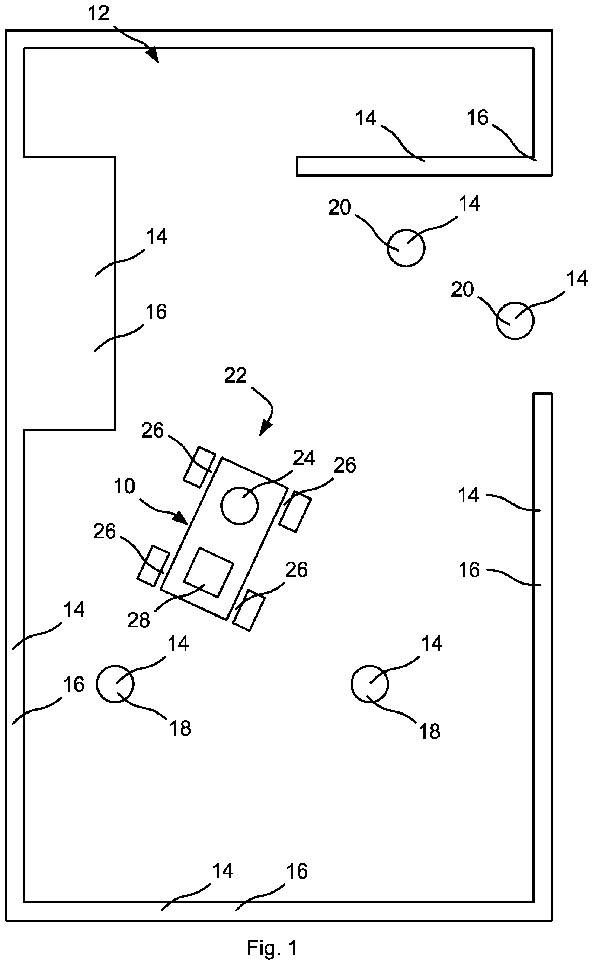

Referring to Fig. 1 a mobile robot 10 is depicted that navigates through an environment 12. The environment 12 includes a plurality of obstacles 14, such as wall sections 16, columns 18, and NPCS 20 that may also move through the environment 12.

The mobile robot 10 comprises a sensor system 22. The sensor system 22 may have a LIDAR apparatus 24 and/or a plurality of wheel encoders 26. Other sensors are possible, such as a camera (IR or RGB), ultrasonic sensors, depth camera, etc. Some of the sensors may be integrated into a combined sensor.

The mobile robot 10 includes a controller 28 that is configured for controlling the mobile robot 10. The controller 28 can be formed by a plurality of different components or be formed by a single component as the case may be.

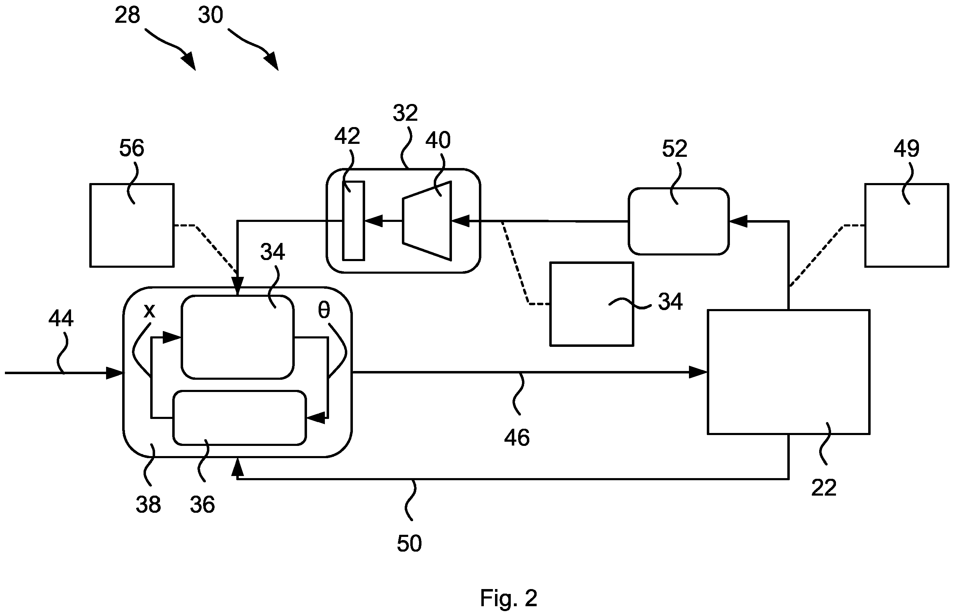

Referring to Fig. 2, the controller 28 includes a motion planning system 30.

The motion planning system 30 comprises a hypernetwork 32, a main network 34 and a non-linear programming (NLP) solver module 36. The main network 34 and the NLP module 36 are included in an MPC 38.

The hypernetwork 32 includes a convolutional backbone 40 and a fully connected decoder head 42. The convolutional backbone 40 comprises a plurality of convolutional layers, where each convolutional layer is followed by a SELU nonlinearity.

The last layer of the convolutional backbone 40 feeds into the decoder head 42. The decoder head 42 has an input layer that comprises at least as many neurons as there are output values from the convolutional layers. There can be a number of hidden layers that are generally getting smaller the closer they are to the output layer. The output layer of the decoder head 42 has as many neurons as there are parameters in a parameter set $\theta$ of the main network 34. The parameter set $\theta$ may include weights and biases.

The MPC 38 receives multiple inputs. One input is the parameter set θ. Another input is a command signal 44 that describes the motion goal of the mobile robot 10, such as go to coordinates x, y. The MPC 38 may also receive a state vector x that is indicative of the state of the mobile robot 10. The state vector x typically includes motion related data that are indicative of the state of motion of the mobile robot, such as current position and orientation as well as the linear and angular velocity. It is also possible that further non-motion related data is included in the state vector, such as the current battery level.

The MPC 38 processes these inputs to generate a control signal 46 that controls the motion of the mobile robot 10 through the environment 12 along a robot trajectory.

Referring to Fig. 2, a method for motion planning is described in more detail. A command signal 44 is given to the mobile robot 10 to move to a final position 48. The sensor system 22 gathers environment sensor data 49 using the various sensors, specifically the LIDAR apparatus 24. Furthermore, the sensor system 22 gathers motion related data 50 based on motion sensors, such as the wheel encoders 26. The motion related data 50 are processed and are indicative of the linear and angular velocity and acceleration.

The environment sensor data 49 are processed in a map processing module 52. The map processing module 52 generates a binary cost map 54 from the environment sensor data 49. The binary cost map 54 is indicative of which portions of the environment are free for the mobile robot 10 or are already occupied by obstacles 14.

The binary cost map 54 is then processed by the hypernetwork 32. Initially the binary cost map 54 is processed by the convolutional backbone 40 for feature extraction and generating an output feature map. The output feature map is then processed by the decoder head 42 which decodes the output feature map into the parameter set θ for the main network 34.

Before feeding the parameter set θ to the main network 34, the parameter set θ may be conditioned. During conditioning the parameter set θ is modified such that the functionality is maintained, but a more predictable behavior of the main network 34 can be obtained. Conditioning can be performed by Lipschitz regularization, for example, which is known the field.

The parameter set θ is then fed to the MPC 38 to be applied to the main network 34. The main network 34 due to the parameter set θ has knowledge 56 about the environment 12 and in particular the obstacles 14, specifically their locations and boundaries. The main network 34 is thus able to determine a constraint score $\hat{V}$ that represents something of a distance of the mobile robot 10 from the closest relevant obstacle 14 within the next time step.

The constraint score is not strictly the geometric distance but also is indicative of the influence of the current linear and angular velocity. Overall the main network 34 is configured such that the constraint score $\hat{V}$ is smaller than or equal to a certain threshold, e.g., zero, if the mobile robot 10 collides with the obstacle 14 in the next predetermined number of time steps provided that the motion of the mobile robot 10 is unchanged.

The main network 34 feeds the constraint score to the NLP solver module 36 which in turn generates the control signal 46 for the next time step, such that the control signal 46 is constrained by the constraint score P.

The control signal 46 is then used to control the motion of the mobile robot 10 such that it moves to the next point of its robot trajectory.

This process is repeated until the mobile robot 10 has reached the final position 48.

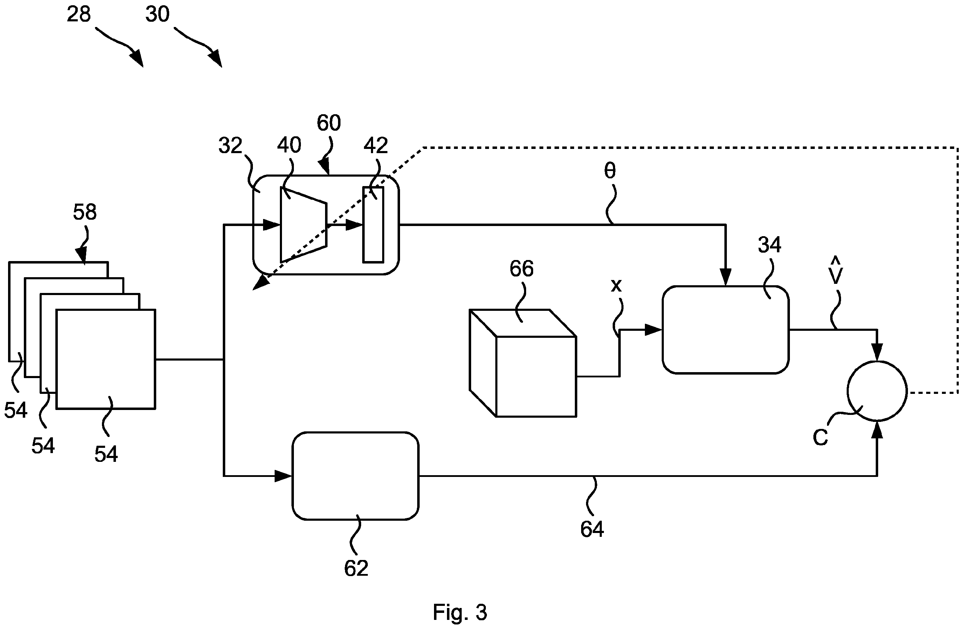

Referring to Fig. 3, a training method for the motion planning system 30 is described.

A training dataset 58 is compiled that includes binary cost maps 54. The binary cost maps 54 can be generated using a simulation or by manually driving the mobile robot 10 through a real world environment. Suitable training datasets 58 can be generated for example from the Stanford 3D Indoor Scene Dataset available at http://buildingparser.stanford.edu/dataset.html.

The binary cost maps 54 are fed to the hypernetwork 32, which is the network under training 60, and a signed distance field (SDF) module 62 which calculates SDF data 64 from the binary cost maps 54. The hypernetwork 32 determines the parameter set θ that is fed to the main network 34 to set the main network 34 up. The SDF data 64 are taken as the ground truth.

Furthermore, the state-space 66 of all (reasonably possible) state vectors x is uniformly discretized. In contrast to the deployment phase where the state vector x is given by the MPC 28, during training the entire state-space 66 sampled so that all state vectors x that could be reached by the mobile robot 10 are used during training.

The state vector x is fed to the main network 34, which determines the constraint score $\hat{V}$.

Both the ground truth and the constraint score $\hat{V}$ are fed to a cost function C, which is preferably a weighted mean square error function of the following form C =

$$\frac{1}{M}\sum_{i=1}^{M}\frac{1}{K}\sum_{j=1}^{K}w_{i,j}\left(V_{i,j} - \hat{V}_{i,j}\right)^2,$$

where M is the total number of training samples, K is the total number of state vectors x, $V_{i,j}$ is the SDF data 64, $\hat{V}_{i,j}$ is the prediction made by the main network 34, and i and j designate the specific sample i and specific state vector j.

The weights depend on the ground truth such that the weight is increased, if the ground truth indicates that there is a boundary of an obstacle. It was found that

$$1 + \alpha \exp\left(-\beta V_{i,j}^2\right)$$

yields reliable results and is especially suited for training. Thus, the cost close to the obstacles 14 is increased relative to the cost away from the obstacles 14. With this approach the boundaries of the obstacles 14 are trained much more specifically, which allows a better generalization.

The result of the cost function C is then used in the well-known backpropagation algorithm to train the parameters of the hypernetwork 32. The training is generally done using stochastic gradient descent as implemented in the ADAM optimizer, for example.

The previous training steps are repeated for each state vector x in the discretized state-space 66.

The training is completed, if a predetermined number of training iterations have happened or a predetermined abortion criterion, such as a certain error threshold, has been met.

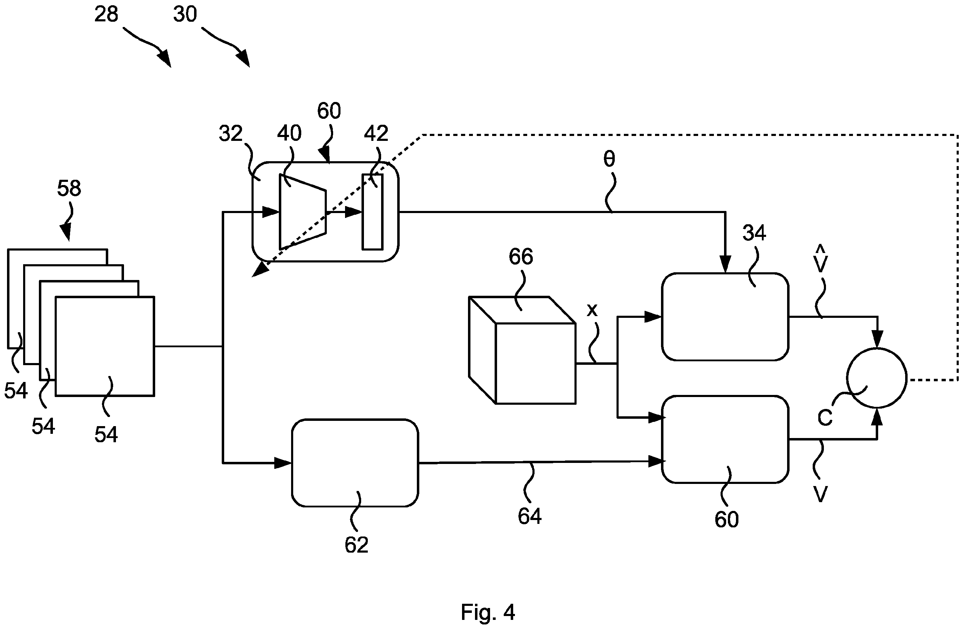

Referring to Fig. 4, a variant of the training method is described. In addition to the SDF module 62 the variant includes a Hamilton-Jacobi (HJ) analysis module 68. The HJ analysis module 68 receives the SDF data 64 and the state vector x. From these inputs the HJ analysis module 68 determines a backward reachable tube (BRT) 70 in state-space 66. The BRT 70 includes the set of state vectors that, if the mobile robot 10 starts with any these state vectors, will inevitably end up in the state vector x received by the HJ analysis module 68. Thus, the HJ analysis module 68 determines, the set of state vectors that will unavoidably lead to a collision with an obstacle 14. From the BRT 70 the HJ analysis module 68 determines the ground truth as a single scalar value.

REFERENCE SIGNS

10 mobile robot
12 environment
14 obstacle
16 wall section
18 column
20 NPC
22 sensor system
24 LIDAR apparatus
26 wheel encoder
28 controller
30 motion planning system
32 hypernetwork
34 main network
36 non-linear programming (NLP) solver module
38 model predictive controller (MPC)
40 convolutional backbone
42 fully connected decoder head
44 command signal
46 control signal
48 final position
49 environment sensor data
50 motion related data
52 map processing module
54 binary cost map

56 knowledge
58 training dataset
60 network under training
62 signed distance field (SDF) module
64 SDF data
66 state-space
68 Hamilton-Jacobi (HJ) analysis module
$\theta$ parameter set
x state vector
$\hat{V}$ constraint score
C cost function

**Claims**

1. A computer-implemented method for motion planning in a mobile robot (10), preferably in a vehicle, the method comprising:

   a) a sensor system (22) capturing sensor data, wherein the sensor data are indicative of an environment (12) around the mobile robot (10), wherein the environment (12) optionally has at least one obstacle (14);
   a control module:
   b) processing the sensor data of step a) to obtain at least one binary cost map (54), wherein each binary cost map (54) is indicative of occupied and unoccupied portions of the environment (12);
   c) processing each binary cost map (54) with a hypernetwork (32) that is trained for generating a parameter set ($\theta$) for a main network (34) based on the binary cost map (54), wherein the parameter set ($\theta$) is configured to cause the main network (34) to generate constraint data from a state vector (x), wherein the constraint data are configured to constrain a control signal (46) to be generated, wherein the state vector (x) is indicative of a state of motion of the mobile robot (10);
   d) applying the parameter set ($\theta$) to the main network (34) to set up the main network (34) for generating the constraint data from the state vector (x), and generating the constraint data from a current state vector;
   e) generating the control signal (46) based on a command signal (44), a current state vector and the constraint data, wherein the control signal (46) is generated to cause the mobile robot (10) to move through the environment (12) along a robot trajectory with the proviso that each obstacle (14) is avoided.

2. The method of claim 1, wherein in step a) the sensor system (22) comprises a distance measuring apparatus, preferably a LIDAR apparatus (24), that captures a point cloud as the sensor data.

3. The method of any of the preceding claims, wherein in step c) the hypernetwork (32) includes a convolutional backbone (40) and a fully connected decoder head (42), and the binary cost maps (54) are processed by the convolutional backbone (40) for feature extraction and the decoder head decodes extracted features into the parameter set ($\theta$).

4. The method of any of the preceding claims, wherein in step c) the parameter set ($\theta$) is regularized, preferably with Lipschitz regularization, before being applied to the main network (34).

5. A motion planning system (30) for a mobile robot (10), preferably for a vehicle, the system comprising means for carrying out a method of any of the preceding claims.

6. A mobile robot (10), preferably a vehicle, comprising a motion planning system (30) of claim 5, wherein the motion planning system (30) controls motion of the mobile robot (10).

7. A computer-implemented method for training a motion planning system (30) of claim 5, the method comprising:

   a) discretizing a state-space (66) of the mobile robot (10) to obtain a set of state vectors (x) for training;
   for at least one, some, or each state vector (x) obtained in step a):
   b) feeding a training dataset (58) consisting of binary cost maps (54) to the hypernetwork (32) to generate a parameter set ($\theta$) for a main network (34)
   c) setting up the main network (34) with the parameter set ($\theta$) of step b);
   d) feeding the state vector (x) to the main network (34) to obtain constraint data;
   e) feeding the training data set to a ground truth calculator and determining ground truth data by determining, with an SDF module, signed distance field data that are indicative of a distance of the mobile robot (10) from an obstacle (14);
   f) updating the parameters of the hypernetwork (32) based on a cost function C applied to the constraint data and the ground truth data.

8. The method of claim 7, wherein in step e) determining the ground truth data involves processing the output of the SDF module with an HJ analysis module (68) that determines the ground truth based on a BRT in state space.

9. The method of claim 7 or 8, wherein in step f) the cost function (C) is a mean squared error (MSE) cost function.

10. The method of claim 9, wherein in step f) the cost function (C) is a weighted MSE cost function, wherein the weights are increased based on the ground truth in an area where the ground truth represents a boundary of an obstacle (14).

11. A computer program comprising instructions, which, upon execution by a data processing device, cause the data processing device to carry out the steps b) to e) of a method for motion planning of any of the claims 1 to 4 or to carry out a method for training a motion planning system (30) of any of the claims 7 to 10.

12. A computer readable data storage medium that has stored thereon a computer program of claim 11.

Fig. 1

Fig. 2

Fig. 3

EP 4 564 120 A1

Fig. 4

Europäisches
Patentamt
European
Patent Office
Office européen
des brevets

# EUROPEAN SEARCH REPORT

**Application Number**

EP 24 18 5217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/347378 A1 (NABATCHIAN AMIRHOSEIN [CA] ET AL) 11 November 2021 (2021-11-11) * paragraphs [0001] - [0006], [0071] - [0079], [0082] - [0087], [0090] - [0099]; figures 2-4,7 * | 1-12 | INV.<br>G05D1/644<br>G05D1/246<br>G05D1/242<br><br>ADD.<br>G05D111/10<br>G05D101/15<br>G05D109/10 |
| A | GEUNSEOB OH ET AL: "HCNAF: Hyper-Conditioned Neural Autoregressive Flow and its Application for Probabilistic Occupancy Map Forecasting", ARXIV.ORG, CORNELL UNIVERSITY LIBRARY, 201 OLIN LIBRARY CORNELL UNIVERSITY ITHACA, NY 14853, 17 December 2019 (2019-12-17), XP081651682, * Section 1, 3 and 5; the whole document * | 1-12 | |
| A | US 2023/089978 A1 (PULVER HENRY [GB] ET AL) 23 March 2023 (2023-03-23) * paragraphs [0005], [0119] - [0175], [0214] - [0218], [0282], [0283]; figures 1-3,6,16 * | 1-12 | |

**TECHNICAL FIELDS SEARCHED (IPC)**

G05D
B60W
G08G
G01C
G01S
G06N
G05B

The present search report has been drawn up for all claims

| Place of search | Date of completion of the search | Examiner |
|---|---|---|
| Munich | 19 November 2024 | Vañó Gea, Joaquín |

EPO FORM 1503 03.82 (P04C01)

## ANNEX TO THE EUROPEAN SEARCH REPORT
## ON EUROPEAN PATENT APPLICATION NO.

EP 24 18 5217

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | | Publication date |
|---|---|---|---|---|
| US 2021347378 A1 | 11-11-2021 | CN | 115552200 A | 30-12-2022 |
| | | US | 2021347378 A1 | 11-11-2021 |
| | | WO | 2021227313 A1 | 18-11-2021 |
| US 2023089978 A1 | 23-03-2023 | EP | 4081876 A1 | 02-11-2022 |
| | | EP | 4361753 A2 | 01-05-2024 |
| | | US | 2023089978 A1 | 23-03-2023 |
| | | WO | 2021152047 A1 | 05-08-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. ZHANG** ; **A. LINIGER** ; **F. BORRELLI**. Optimization-Based Collision Avoidance.. *arXiv*, 10 June 2018, http://arxiv.org/abs/1711.03449
- **B. BRITO** ; **B. FLOOR** ; **L. FERRANTI** ; **J. ALONSO-MORA**. Model Predictive Contouring Control for Collision Avoidance in Unstructured Dynamic Environments.. *arXiv*, 20 October 2020, http://arxiv.org/abs/2010.10190
- **S. H. NAIR** ; **E. H. TSENG** ; **F. BORRELLI**. Collision Avoidance for Dynamic Obstacles with Uncertain Predictions using Model Predictive Control.. *arXiv*, 06 August 2022, http://arxiv.org/abs/2208.03529
- **A. D. AMES** ; **X. XU** ; **J. W. GRIZZLE** ; **P. TABUADA**. Control Barrier Function Based Quadratic Programs for Safety Critical Systems. *IEEE Trans. Automat. Contr.*, August 2017, vol. 62 (8), 3861-3876
- **A. D. AMES** ; **S. COOGAN** ; **M. EGERSTEDT** ; **G. NOTOMISTA** ; **K. SREENATH** ; **P. TABUADA**. Control Barrier Functions: Theory and Applications.. *arXiv*, 26 March 2019, http://arxiv.org/abs/1903.11199
- **J. ZENG** ; **B. ZHANG** ; **K. SREENATH**. Safety-Critical Model Predictive Control with Discrete-Time Control Barrier Function.. *arXiv*, 23 March 2021, http://arxiv.org/abs/2007.11718
- Safe Robot Navigation in a Crowd Combining NMPC and Control Barrier Functions. **V. VULCANO** ; **S. G. TARANTOS** ; **P. FERRARI** ; **G. ORIOLO**. 2022 IEEE 61st Conference on Decision and Control (CDC), Cancun, Mexico. IEEE, December 2022, 3321-3328
- **N. N. MINH** ; **S. MCLLVANNA** ; **Y. SUN** ; **Y. JIN** ; **M. VAN**. Safety-critical model predictive control with control barrier function for dynamic obstacle avoidance.. *arXiv*, 21 November 2022, http://arxiv.org/abs/2211.11348
- Safety-Critical Control and Planning for Obstacle Avoidance between Polytopes with Control Barrier Functions. **A. THIRUGNANAM** ; **J. ZENG** ; **K. SREENATH**. 2022 International Conference on Robotics and Automation (ICRA), Philadelphia, PA, USA. IEEE, May 2022, 286-292
- **Z. JIAN et al.** Dynamic Control Barrier Function-based Model Predictive Control to Safety-Critical Obstacle-Avoidance of Mobile Robot.. *arXiv*, 18 September 2022, http://arxiv.org/abs/2209.08539

- **M. SRINIVASAN** ; **A. DABHOLKAR** ; **S. COOGAN** ; **P. VELA**. Synthesis of Control Barrier Functions Using a Supervised Machine Learning Approach.. *arXiv*, 10 March 2020, http://arxiv.org/abs/2003.04950
- **K. LONG** ; **C. QIAN** ; **J. CORTÉS** ; **N. ATANASOV**. Learning Barrier Functions with Memory for Robust Safe Navigation. *arXiv*, 10 February 2021, http://arxiv.org/abs/2011.01899
- **A. S. LAFMEJANI** ; **S. BERMAN** ; **G. FAINEKOS**. NMPC-LBF: Nonlinear MPC with Learned Barrier Function for Decentralized Safe Navigation of Multiple Robots in Unknown Environments.. *arXiv*, 16 August 2022, http://arxiv.org/abs/2208.07974
- **G. S. CAMPS** ; **R. DYRO** ; **M. PAVONE** ; **M. SCHWAGER**. Learning Deep SDF Maps Online for Robot Navigation and Exploration.. *arXiv*, 02 August 2022, http://arxiv.org/abs/2207.10782
- **H. OLEYNIKOVA** ; **A. MILLANE** ; **Z. TAYLOR** ; **E. GALCERAN** ; **J. NIETO** ; **R. SIEGWART**. *Signed Distance Fields: A Natural Representation for Both Mapping and Planning*, 2016, 6
- **C. BÁLINT** ; **G. VALASEK** ; **L. GERGÓ**. Operations on Signed Distance Functions. *Acta Cybern*, May 2019, vol. 24 (1), 17-28
- **D. HA** ; **A. DAI** ; **Q. V. LE**. HyperNetworks.. *arXiv*, 01 December 2016, http://arxiv.org/abs/1609.09106
- **L. DEUTSCH**. Generating Neural Networks with Neural Networks.. *arXiv*, 06 April 2018, http://arxiv.org/abs/1801.01952
- **G. LITTWIN** ; **L. WOLF**. Deep Meta Functionals for Shape Representation.. *arXiv*, 17 August 2019, http://arxiv.org/abs/1908.06277
- **V. K. CHAUHAN** ; **J. ZHOU** ; **P. LU** ; **S. MOLAEI** ; **D. A. CLIFTON**. A Brief Review of Hypernetworks in Deep Learning.. *arXiv*, 10 August 2023, http://arxiv.org/abs/2306.06955
- **T. MIYATO** ; **T. KATAOKA** ; **M. KOYAMA** ; **Y. YOSHIDA**. Spectral Normalization for Generative Adversarial Networks.. *arXiv*, 16 February 2018
- **H. GOUK** ; **E. FRANK** ; **B. PFAHRINGER** ; **M. J. CREE**. Regularisation of Neural Networks by Enforcing Lipschitz Continuity.. *arXiv*, 09 August 2020, http://arxiv.org/abs/1804.04368

- **H.-T. D. LIU** ; **F. WILLIAMS** ; **A. JACOBSON** ; **S. FIDLER** ; **O. LITANY**. Learning Smooth Neural Functions via Lipschitz Regularization.. *arXiv*, 10 May 2022, http://arxiv.org/abs/2202.08345